Europäisches Patentamt

European Patent Office

Office européen des brevets

(11) Publication number: **0 441 498 A2**

# EUROPEAN PATENT APPLICATION

(21) Application number: **91300490.9**

(22) Date of filing: **23.01.91**

(51) Int. Cl.5: **G06F 15/72**

(30) Priority: **05.02.90 GB 9002478**

(43) Date of publication of application:
**14.08.91 Bulletin 91/33**

(84) Designated Contracting States:
**DE GB**

(71) Applicant: **CROSFIELD ELECTRONICS LIMITED**
**Wedgewood Way**
**Stevenage Hertfordshire SG1 4QN(GB)**

(72) Inventor: **Freeman, Stephen**
**7 Beaudesert**
**Leighton Buzzard, Bedfordshire LU7 8HJ(GB)**

(74) Representative: **Skone James, Robert Edmund**
**et al**
**GILL JENNINGS & EVERY 53-64 Chancery**
**Lane**
**London WC2A 1HN(GB)**

(54) **Generating control data array.**

(57) A method and apparatus for generating an array of control data defining an area of an image. The method comprises, for each pixel of the image, determining whether the colour of the pixel satisfies predetermined conditions, and if it does, positioning a control data creation array over the corresponding control data array pixel. The creation array has a set of pixels defining a three dimensional profile of data values selected from a group of at least three values (such as a gaussian profile). For each control data array pixel a control data value is generated in accordance with a predetermined algorithm based on the control data creation array pixel values and corresponding current control data array pixel values.

Fig.1.

## GENERATING CONTROL DATA ARRAY

The invention relates to a method of generating an array of control data defining an area of an image.

In the field of image processing, particularly where an image is represented electronically by digital data defining the colour content of pixels of the image, a very useful tool for manipulating the image is a control data array or mask. The mask defines an area of the image which is to be processed differently from the remainder of the image. For example, it may be desired to extract part of an image for insertion in another image. This is achieved by defining in a mask or control data array having pixels corresponding to the image pixels, those pixels which define the part of the image to be extracted. Conventionally, this has been achieved by generating a so-called binary mask in which the pixels in the control data array have one of two values depending on whether or not they correspond with that part of the image to be extracted. One of the problems with these binary masks is that they produce a "hard-edged" cut-out which can look very unrealistic when the cut-out image is inserted into another image.

More recently, advantage has been taken of the fact that the control data can be represented by eight bit values. Consequently, a range of 256 values is available for each mask pixel. This variation in values has been used to generate soft-edged masks in which the value is used to control the proportion of each pixel colour which is used to generate the final colour upon insertion of the extracted image portion in the second image so leading to a blending of the images together. At present, methods for generating soft-edged masks are slow to operate.

In accordance with one aspect of the present invention, a method of generating an array of control data defining an area of an image comprises, for each pixel of the image, determining whether the colour of the pixel satisfies predetermined conditions, and if it does, positioning a control data creation array over the corresponding control data array pixel, the creation array having a set of pixels defining a three dimensional profile of data values selected from a group of at least three values, and generating for each control data array pixel a control data value in accordance with a predetermined algorithm based on the control data creation array pixel values and corresponding current control data array pixel values.

In accordance with a second aspect of the present invention, apparatus for generating an array of control data defining an area of an image comprises a control data store for storing an array of control data; a control data creation array store for storing a control data creation array; and processing means coupled with the stores and, for each pixel of the image, for determining whether the colour of the pixel satisfies predetermined conditions, and if it does, positioning the control data creation array stored in the control data creation array store over the corresponding control data array pixel from the control data store, the creation array having a set of pixels defining a three dimensional profile of data values selected from a group of at least three values, and for generating and storing in the control data store for each control data array pixel a control data value in accordance with a predetermined algorithm based on the control data creation array pixel values and corresponding current control data array pixel values.

We have devised a method and apparatus for easily and rapidly generating soft-edged masks. Effectively, this comprises painting with an electronic paintbrush directly into the control data array. Conventional electronic paintbrushes exist which have three dimensional data profiles and it is a comparatively simple matter to adapt these to paint into the so-called mask plane or control data array store instead of, or as well as directly into the image planes. The advantage of using such an electronic brush is that the variation in mask value at the edge of the image to be masked is automatically generated by virtue of the three-dimensional profile of the previously generated brush.

Preferably, the three dimensional profile is chosen so that when the corresponding image portion is combined with another image, the result is substantially anti-aliased. For example, the control data creation array may have a gaussian profile.

Typically, the scale of control data array values is the same as the scale for each colour component in the original image. For example, the scale may have 256 values, typically in the range 0-255.

The step of determining which image pixels satisfy the predetermined conditions may be achieved in any conventional manner. The invention is particularly suitable, however, for use in a colour selective masking technique in which the colour component values for each pixel are compared with preset ranges and if all the colour component values fall within the corresponding ranges then hat pixel satisfies the condition.

An example of apparatus and a method in accordance with the present invention will now be described with reference to the accompanying drawings, in which:-

Figure 1 is a block diagram of the apparatus;

Figure 2 is a block diagram of the graphics image processor of Figure 1

Figure 3 illustrates the image and mask planes;

Figure 4 is a flow diagram illustrating operation of the apparatus;

Figures 5A and 5B illustrate the mask profile in a perspective view and cross-section respectively; and,

Figure 6 illustrates the form of a mask generated by a method according to the invention.

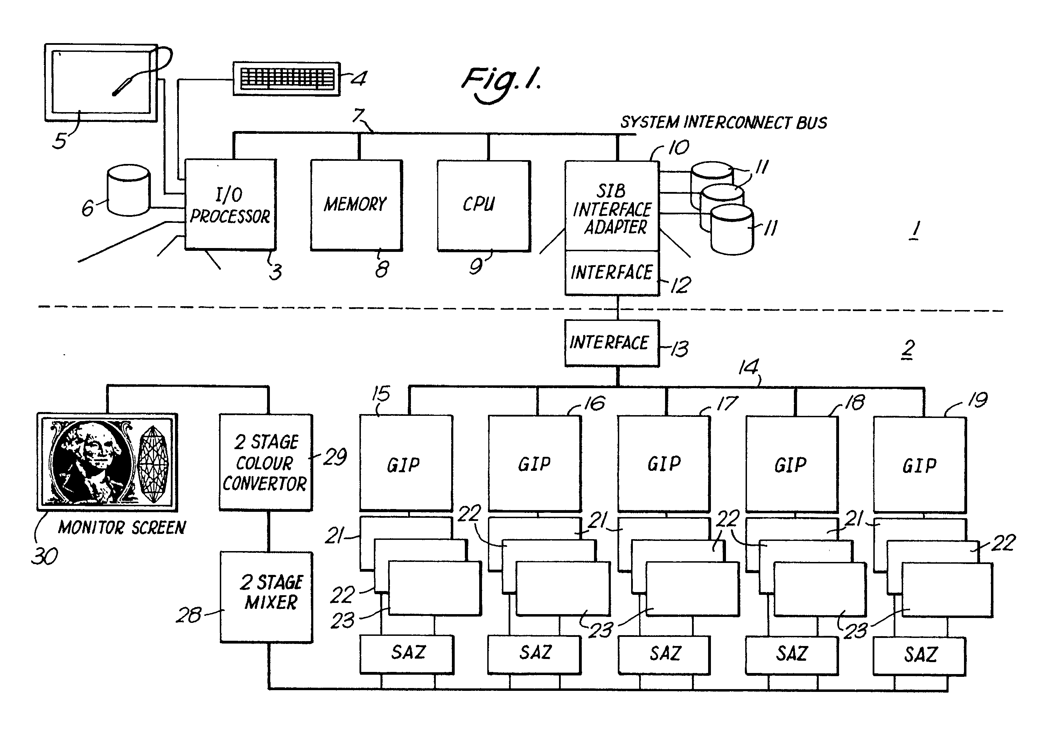

The apparatus shown in Figure 1 can be divided into two primary parts. These comprise the host 1 and the graphics sub-system 2. The division is shown in Figure 1 by a dashed line. The host 1 is a 68020 microprocessor based system running UNIX which is a multi-tasking, multi-user operating system. The host comprises an I/O processor 3 coupled to a keyboard 4, a digitizing tablet 5 and associated pen 31, a system disk 6 and other data sources (not shown). The I/O processor 3 is connected to a system inter-connect bus (SIB) 7 which is connected to ROM and RAM memory 8, a CPU 9, and an interface adapter 10. The interface adapter 10 is connected to a number of high speed image discs 11 which hold data defining the colour content of pixels of images at high resolution, the adapter also being connected via an interface 12 with the graphics sub-system 2. As mentioned above, the host has a conventional form and will not be described in detail. However, the SIB 7 is described in more detail in EP-A-0332417.

The programme that runs on the host is a single "process" which reads and processes inputs from the digitizing tablet 5 under operator control and directs the graphics part 2 to display the host's responses to those inputs on the graphics monitor 30. Essentially, the system takes advantage of the host system in being able to perform a majority of the calculations so that only a small amount of control data is passed to the graphics sub-system. This graphics part 2 is much better than the host 1 at creating and manipulating graphical objects but the host is better at controlling input/output to peripherals, discs and tapes and is relatively easy to programme.

The graphics sub-system 2 comprises an interface 13 which connects the graphics part to the host 1, the interface 13 being connected to a bus 14. The bus 14 is connected to five graphics image processors (GIPs) 15-19. In this embodiment, it is assumed that the images are defined by four colour components, namely cyan, magenta, yellow and black, there being a separate GIP for each colour. Thus, the GIP 15 processes the cyan colour component, the GIP 16 the magenta colour component, the GIP 17 the yellow colour component and the GIP 18 the black colour component. If the image was represented by a different number of colour components, for example red, green and blue then only three of the GIPs would be needed. The advantage of providing the GIPs 15-18 in parallel is that each component of each pixel in the image can be processed in parallel so that the overall processing time is reduced by up to four times over the processing time with a single processor. A further advantage of using the GIPs is that each has a bit-slice processor on which the programmer can define instructions useful for a particular application.

A fifth GIP 19 is provided for defining one or more masks and other features.

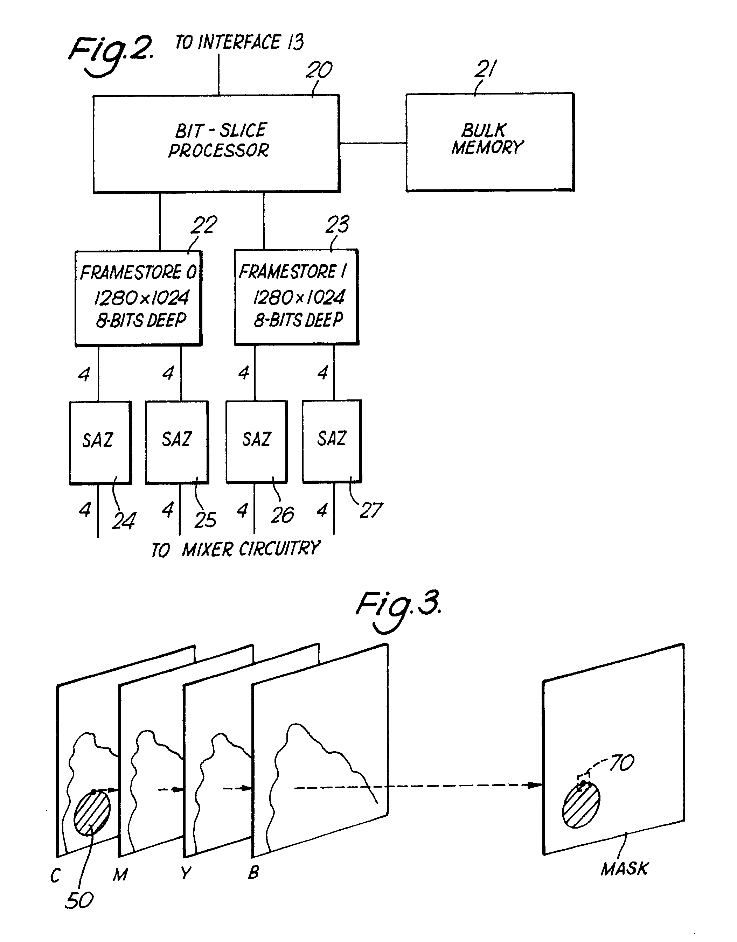

The construction of one of the GIPs of Figure 1 is shown in Figure 2. Each GIP comprises a bit-slice processor 20 coupled to bulk memory 21. This memory 21 will hold image data, brush profiles and text as required and is used as virtual image memory.

The bit-slice processor 20 is also connected to a pair of framestores 22, 23 each of which has dimensions 1280x1204 and is 8 bits deep. In the GIPs 15-18, each framestore will hold 8 bit colour data while in the mask GIP 19 each framestore can be used to hold 8 bit masks or two separate 4 bit masks. Furthermore, one of the framestores in the GIP 19 can be used to display menus in one four bit plane and overlays in the other four bit plane. Overlays comprise construction lines and boxes and the like which are to be displayed on the monitor.

The eight bit data in each framestore 22, 23 is applied in four bit "nibbles" to respective scroll, amplify and zoom circuits 24-27 which operate in a conventional manner to perform one or more of the functions of scroll, zoom and amplify, the outputs from these circuits being fed to a mixer circuit 28. The circuit 28 mixes the data from each of the framestores 22 associated with the GIPs 15-18 with the data from each of the frame stores 23 associated with the GIPs 15-18 in accordance with the mask stored in the framestore 22 of the GIP 19. This mixer circuit which operates in two stages is described in more detail in EP-A-0344976.

The output from the mixer circuit 28 is fed to a two stage colour converter 29 which converts the four colour component data to three colour component data e.g. red, green and blue suitable for controlling the display on a monitor screen 30.

In use, images are stored on the high speed image disks 11 and these images may have been generated by scanning original transparencies or other representations or they may have been created electronically using an electronic paint brush. The host 1 causes relevant portions of these images to be "paged" in and out of the bulk memory 21 in the GIPs 15-18 and brush profiles to be loaded and unloaded from the bulk memory 21 in the GIP 19. The interface adaptor 10 has its own 68020 processor to allow it independently to control the disks 11. The GIPs 15-18 are directed by the host 1 to do various things to images in the bulk memory 21 so that when a GIP attempts to access an address in an image that is not currently in its bulk memory then part of that memory is written back to disc and a new portion read in. After the GIPs have finished processing, the data in the framestores is then scrolled, zoomed and/or amplified as necessary, mixed in the circuit 28, converted to monitor format and then displayed.

If the host 1 wishes to display menus on the screen, these are drawn into the mask GIP framestore 23, known as the "overlay plane".

The present invention is concerned with generating a mask in the framestore 22 of the GIP 19.

In this example, it will be assumed that an image is already stored in digital form in the disks 11 and this may have been created using an electronic image creation tool or have been scanned in a conventional manner from an original transparency. The operator wishes to select a certain portion of the stored image. The image is transferred by the host 1 from the disks 11 to the bulk memory 21 of the GIPs 15-18. Figure 3 illustrates schematically the manner in which an image is stored in the bulk memory 22. The colour of each pixel is defined in terms of colour components cyan (C), magenta (M), yellow (Y) and black (B) each of which has a density lying in the range 0-255. In this case, a predominantly cyan feature 50 is to be extracted for use in another image (not shown).

To achieve this, a suitable mask is generated in the frame store 22 of the GIP 19. For each image pixel there exists a corresponding mask pixel and the data in the mask pixels defines those areas of the image which correspond to selected areas. Thus, in a conventional hard mask, each mask pixel corresponding to a portion of an image to be selected will contain a binary "1" while the remainder will have a binary "0".

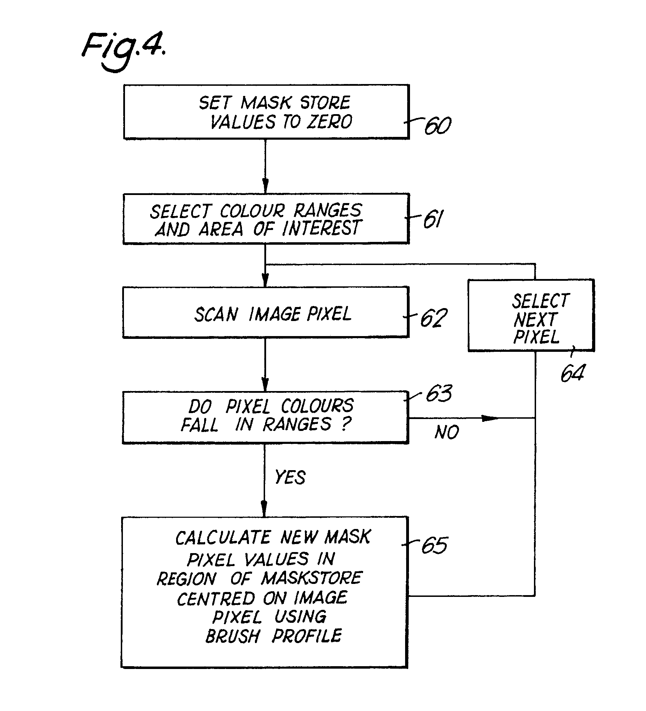

In the present case, a more sophisticated masking technique is described for generating a soft-edged mask. Initially all the data values in the appropriate part of the bulk memory 21 of the mask GIP 19 are set to zero (step 60, Figure 4). Alternatively this step can be ignored if an existing mask is to be modified. The operator then selects the ranges of each colour component required to define the mask pixels. This may be carried out in a variety of ways, for example by keying in specific ranges via the keyboard 4, selecting ranges by reference to displayed menus using the digitizing tablet 5, or preferably by selecting certain colours in the displayed image. This latter technique will be described in more detail. Initially, the required image is transferred from the high speed image disks 11 to the graphics sub-system 2, respective colour separations being stored in the bulk memory 21 of the GIPs 15-18. The operator defines a section of the image which is to be displayed and this is transferred from the bulk memory to the framestores 22. The operator then positions a cursor displayed on the monitor screen 30 using the pen 31 and the digitizing tablet 5 at a position whose colour corresponds to that colour which he wishes to fall within a masked region. The host 1 then causes the GIPs 15-18 to pass back to it the data values corresponding to the pixels falling under the cursor and also surrounding pixels. The host computes average values for each colour component from the selected pixels and then computes a range for each colour component centered on the selected, average colour component value. These ranges defined by upper and lower limits are then stored in respective registers within each GIP 15-18. The ranges may also be displayed in a portion of the monitor screen 30. Subsequently, the operator will move the cursor to a different position and the process will be repeated. If the new range is larger than the previous range then new limits will be stored. Once the full set of limits has been stored the operator also defines the area of the image which is of interest (step 61) and then the system enters a mask generation mode.

In the mask generation mode, the processor 20 in each GIP 15-18 scans the pixels within the area of interest defined by the operator, each GIP inspecting the same pixel at each step (step 62). For each pixel, the processor 20 compares the colour component value with the previously stored range to determine whether the colour component falls within the range or not (step 63). If the colour component value does not fall within the range then the processor 20 changes the potential on a normally HIGH condition line (not shown) connected to the GIPs 15-19, to LOW but if the value does fall within the range, no action is taken with the condition line.

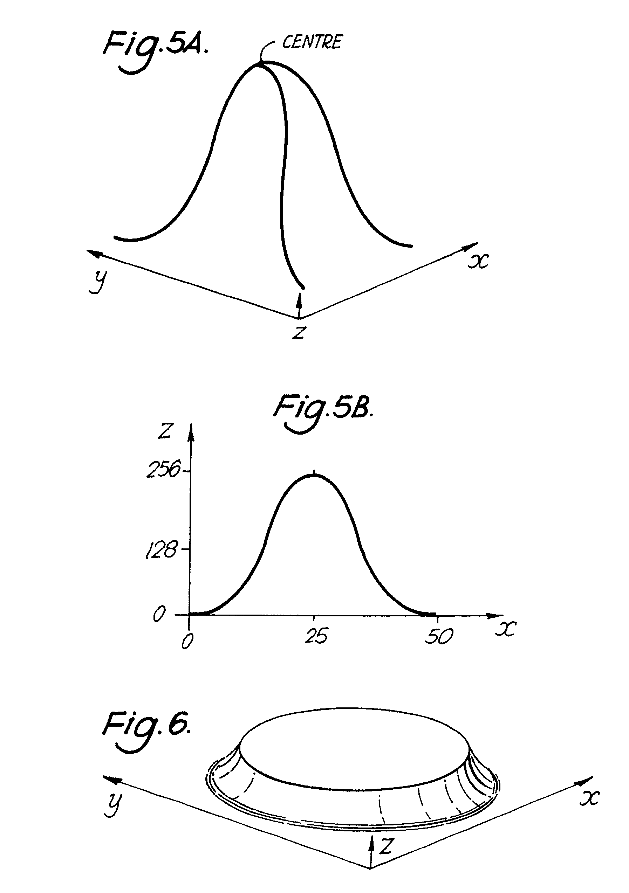

After each scanning step the processor 20 in the GIP 19 reviews the condition of the condition line and if it is HIGH, this indicates that each colour component of the pixel in question falls within its respective range and thus satisfies the mask condition. If one or more of the colour components does not fall within its range then the condition line will have been switched LOW and this will be noted by the GIP 19 which will take no action so that scanning passes to the next pixel (step 64). If the pixel values do fall in the respective ranges then step 65 is implemented. In this step, mask values are calculated by the processor 20 of the GIP 19, effectively by positioning a mask brush profile of square form 70 (Figure 3) within the mask plane in framestore 22 centred on the pixel in question. The mask brush profile is stored in the bulk memory 21 of the GIP 19 and has a general Gaussian form as shown in Figure 5A and in cross-section in Figure 5B. (x,y indicate the lateral dimensions of the brush and z is a density value in the range 0-255). It will be seen that the size of the mask brush is such that it covers several pixels, in this example it has a maximum dimension of 50 pixels. The brush is arranged with its centre pixel coincident with the selected or scanned image pixel (X,Y) so that, for example, up to 25 mask pixels on either side of the selected pixel will be "covered" by corresponding brush pixels. In practice the brush can be positioned to sub-pixel accuracy e.g. to 1/256 of a pixel and this allows a random sub-pixel offset to be introduced. For each mask pixel which corresponds to or is covered by a brush pixel, a new mask value is determined in accordance with the following formula:

New mask Pixel (X,Y) = Old Mask Pixel (X,Y)x(255 - Mask Brush Pixel(at X,Y)) /255 + Mask Brush Pixel (at X,Y) /255

This process is repeated for all the pixels in the image and will result in a flat plane of zero values within the framestore 22 of the GIP 19 apart from that area corresponding to the area to be selected 50 where the profile in three dimensions of the mask plane has the form shown in Figure 6. That is, a generally flat central section and a curved outer section or soft edge. It will be seen from Figure 5 that by using the predetermined three-dimensional brush profile, the necessary soft edge has been determined automatically. A speed improvement could be achieved by only performing the process at the edges of the coloured image following with the selected colour ranges.

Once the mask has been created, the operator can cause the masking operation itself to take place by suitably instructing the host 1. The host 1 will then instruct the graphics sub-system 2 to carry out the masking operation which is performed by the mixer circuit 28. Effectively, the mixer circuit 28 combines images in the framestores 22, 23 of each GIP 15-18 in accordance with the mask values in the framestore 22 of the GIP 19. The general formula for this combination is given below:

Displayed Pixel (X,Y)

= Framestore 22 (X,Y) x (255- Mask Pixel (X,Y))/255

+ Framestore 21 (X,Y) x Mask Pixel (X,Y) /255

The mask can be changed by varying the ranges stored in the registers also in a conventional manner.

It should be understood that although the method has been described in connection with a "colour selective" mask technique, there are many processes that could be used to produce values in the control or mask plane. Indeed, any process that examines the image one pixel at a time and arrives at some binary yes/no decision about the production of mask pixel could use this technique.

Additionally, a smoothing or thresholding process could be applied to the mask plane (as a post-process) to "fine-tune" the mask to be a "good fit" over the object in the image to be cut out.

A further modification could be to use a small, random x,y offset from centre of an in-range pixel. This improve the quality of anti-aliasing for the services of cut and post operations.

**Claims**

1. A method of generating an array of control data defining an area of an image, the method comprising for each pixel of the image, determining whether the colour of the pixel satisfies predetermined conditions, and if it does, positioning a control data creation array over the corresponding control data array pixel, the creation array having a set of pixels defining a three dimensional profile of data values selected from a group of at least three values, and generating for each control data array pixel a control data value in accordance with a predetermined algorithm based on the control data creation array pixel values and corresponding current control data array pixel values.

2. A method according to claim 1, wherein the edge of the control data creation array has an anti-aliased profile.

3. A method according to claim 2, wherein the control data creation array has a gaussian profile.

4. A method according to any of the preceding claims, wherein the scale of control data array values is the same as the scale for each colour component in the original image.

5. A method according to any of the preceding claims, wherein the predetermined algorithm defines a colour selective mask technique.

6. Apparatus for generating an array of control data defining an area of an image, the apparatus comprising a control data store for storing an array of control data; a control data creation array store for storing a control data creation array; and processing means coupled with the stores and, for each pixel of the image, for determining whether the colour of the pixel satisfies predetermined conditions, and if it does, positioning the control data creation array stored in the control data creation array store over the corresponding control data array pixel from the control data store, the creation array having a set of pixels defining a three dimensional profile of data values selected from a group of at least three values, and for generating and storing in the control data store for each control data array pixel a control data value in accordance with a predetermined algorithm based on the control data creation array pixel values and corresponding current control data array pixel values.

Fig. I.

**Fig.2.**

TO INTERFACE 13

**Fig.3.**

MASK

## Fig.4.

```
┌─────────────────────────┐
│    SET MASK STORE       │
│    VALUES TO ZERO       │── 60
└─────────────────────────┘
            │
            ▼
┌─────────────────────────┐
│  SELECT COLOUR RANGES   │── 61
│  AND AREA OF INTEREST   │
└─────────────────────────┘
            │
            ▼                          ┌──────────────┐
┌─────────────────────────┐           │   SELECT     │
│    SCAN IMAGE PIXEL      │── 62      │   NEXT       │
└─────────────────────────┘           │   PIXEL      │
            │                          └──────────────┘
            ▼                                   │ 64
┌─────────────────────────┐── 63
│    DO  PIXEL COLOURS     │─────────── NO ────►
│    FALL  IN RANGES ?     │
└─────────────────────────┘
            │
           YES
            │
            ▼
┌─────────────────────────┐
│  CALCULATE NEW MASK      │── 65
│  PIXEL VALUES IN         │
│  REGION  OF MASKSTORE    │
│  CENTRED ON IMAGE        │
│  PIXEL  USING            │
│  BRUSH  PROFILE          │
└─────────────────────────┘
```

**Fig.5A.**

**Fig.5B.**

**Fig.6.**